# EUROPEAN PATENT SPECIFICATION

(11) **EP 3 772 976 B1**
(45) Date of publication and mention of the grant of the patent: **21.10.2026**
(21) Application number: 19739607.0
(22) Date of filing: 12.07.2019
(51) Int. Cl.: A23G 3/34, A23G 3/40, A23G 3/48, A23G 3/50, A21D 13/38, A21D 13/32, A21D 13/36

(54) **FAT-BASED FILLING COMPOSITION**
FETTBASIERTE FÜLLUNGSZUSAMMENSETZUNG
COMPOSITION DE REMPLISSAGE À BASE DE GRAISSE

(30) Priority: 30.07.2018 EP 18186349
(43) Date of publication of application: 17.02.2021
(73) Proprietor: Société des Produits Nestlé S.A., 1800 Vevey (CH)
(72) Inventor: FERNANDEZ,FARRES, Isabel, 1012 LAUSANNE (CH); GUNES, Zeynel,Deniz, 1000 LAUSANNE 27 (CH); MARTY-TERRADE, Stephanie, STRENSALL YO32 5YN (GB); NEGRINI, Renata, YORK YO1 8SU (GB); RAY, Joydeep, 1066 EPALINGES (CH)
(74) Representative: Slaven, John William
(86) International application number: PCT/EP2019/068900
(87) International publication number: WO 2020/025295

(56) References cited:
- EP-A1- 2 443 935
- EP-A1- 2 599 390
- WO-A1-2010/080872
- WO-A1-2016/038155
- WO-A1-2016/096232
- WO-A1-2016/156426
- WO-A1-2018/054746
- WO-A2-01/72147
- US-A1- 2002 106 426
- US-A1- 2010 136 182
- AGRICULTURAL RESEARCH SERVICE: "Abridged List Ordered by Nutrient Content in Household Measure", 29 January 2025, XP093247953

## Description

### Field of the invention

The present invention relates to a chocolate product comprising an aerated lipid based filling compositions (also referred to as creams, or pralines), more particularly to lipid based fillings comprising fibre, to the use of fibres for preparation of filling compositions, as well as to methods for preparing such a filling composition and to the use of the filling composition as a filling in a food product.

### Background of the invention

Lipid based fillings are used in a variety of food products, especially in the field of confectionery and bakery applications. Examples are lipid-based fillings, include sweet or savory filings, such as for sandwich biscuits, for wafer products, for crackers or for cakes. However, such lipid-based fillings tend to have a nutritional profile high in total fat and high in saturated fats due to the solid state of the fat that is necessary in order to provide the desired textural properties.

The type of fat used in those lipid-based fillings governs the texture as well as the organoleptic properties of the product. For instance, a fat for a sandwich biscuit filling must provide a sufficiently firm texture to ensure shape stability of the product and to avoid squeezing out the filling upon handling. It should melt in the mouth and it should only have minor fractions of solids that melt above the blood temperature to yield a creamy mouth feel.

The hardness and the melting profile of a fat are linked to its degree of saturation. Highly saturated fats are usually solid at ambient conditions, e.g. palm fat or any hydrogenated vegetable fat. Low levels of saturation yield a liquid product at ambient conditions, e.g. a sunflower oil.

In order to impart the required textural and sensorial properties to lipid-based fillings, high SFA (saturated fatty acids), solid type fats are used for lipid-based fillings. Commonly used fats for lipid-based fillings are hydrogenated coconut and palm kernel oils. Examples of typical conventional cream fillings include those described, for instance, in US 3,244,536, US 4,834,991, or US 4,753,812, as well as in the chapter entitled 'Sweet and savoury biscuit creams', in D. Manley, Biscuit, cracker and cookie recipes for the food industry, Woodhead Publishing Limited, 2001, p. 137ff.

However, fats containing high amounts of saturated fatty acids (SFA) are known to have negative health benefits and are linked to an enhanced risk for cardiovascular diseases. In the recent years, this has led to an increasingly negative consumer perception of saturates.

Hydrogenation of oil is a commonly used technique to obtain solid type fats from liquid oils. Besides the resulting high SFA content, the presence of trans fatty acids in partially hydrogenated fats has become a severe health issue. Trans fatty acids are associated with cardiovascular diseases as well as with the risk of getting diabetes and some types of cancer such as breast cancer.

Hence it would be desirable to reduce or replace high SFA solid-type fats, or hydrogenated fats containing significant levels of trans fatty acids, by low SFA liquid oils. However, for persons skilled in the art it is evident that in filling compositions it is not possible to use a liquid oil instead of a solid fat. A difficulty in just increasing / replacing the solid fats with low SFA liquid oils is that this impacts on the physical properties such as the taste, texture and the overall appearance of the filling compositions (organoleptic parameters). Also, the replacement of solid fats by low SFA liquid oil in the recipe can have a negative impact on processability, such as giving a much softer and stickier filling composition, which can be unprocessable.

US2002/0106426 A1 describes a reduced saturated fat lipid based filling, which comprises (a) at least about 20 % lipid, wherein said lipid is selected from the group consisting of digestible lipid, non-digestible lipid, and mixtures thereof; and (b) from about 0.5 % to about 35 % crystallizing lipid. According to US2002/0106426, the fillings described therein can have about 20 % less, or even 30 % less saturated fat than comparable standard full fat saturated fat lipid based fillings.

US2008/0193621 A1 relates to a cream filler composition which is reported to be free of partially hydrogenated fats and has a saturated fat fraction representing not more than 5 % w/w of the total lipid fraction. The composition contains a lipid fraction, a powder sweetener composition, and a wheat gluten fraction having an increased gliadin content.

WO2009/013473 discloses a confectionery composition that is relatively high in polyunsaturated fatty acids. Besides the non-lipid confectionery additives such as sugar cocoa powder, milk powder, yoghurt powder, flavouring, and emulsifier the composition contains a SFA reduced fat blend.

WO 2016/038155 A1 discloses a composite chocolate product containing a filling (75 wt-%) and milk chocolate (25 wt-%) covering the filling.

In all of the above the SFA reduction is achieved by a low SFA fat blend containing a crystallizing or structuring agent such as a hydrogenated fat, a highly saturated fat fraction or certain proteins. Furthermore, low SFA fat blends tend to compromise the solid texture of a fat and the SFA reduction potential is limited. Moreover, hydrogenated fats have a very negative consumer perception as described above.

The consumer is not willing to compromise on the organoleptic properties of filling compositions, in order to reduce consumption of SFA. Taste, texture and overall appearance are such organoleptic properties.

Obviously, industrial line efficiency is important in the food industry. This includes handling and processing of raw materials, processing of the filling, preparation of composite products comprising the filing, packaging and later storing, in warehouses, on the shelf or at home.

Accordingly, there is an ongoing need to provide low SFA lipid based filing compositions, having good organoleptic properties.

It is an object of the present invention to provide lipid based filling compositions that have a low SFA content.

There is interest in being able to increase the amount of dietary fibre consumed in people's diets. Although many consumers desire to increase the amount of dietary fibre they consume, food products providing appreciable levels of dietary fibre are often unappealing in terms of texture and mouthfeel.

It would be advantageous to provide lipid based filing compositions that are low in SFA and contain dietary fibre, and that may be easily industrialised at a reasonable cost without compromising the organoleptic parameters.

### Summary of the invention

An object of the present invention is to improve the state of the art and to provide an improved solution to overcome at least some of the inconveniences described above or at least to provide a useful alternative. Any reference to prior art documents in this specification is not to be considered an admission that such prior art is widely known or forms part of the common general knowledge in the field. As used in this specification, the words "comprises", "comprising", and similar words, are not to be interpreted in an exclusive or exhaustive sense. In other words, they are intended to mean "including, but not limited to". The object of the present invention is achieved by the subject matter of the independent claims. The dependent claims further develop the idea of the present invention.

Advantageously the present invention makes it possible to provide lipid based fillings, which are low in SFA, whilst maintaining the good organoleptic properties of a corresponding solid fat filling.

Advantageously filling compositions of the invention have good temperature sensitivity properties as evidenced by the analysis carried out in the examples in respect of storage stability.

### Brief description of the drawings

Figure 1 displays solid fat contents.
Figure 2 displays the absence of oiling out from examples within the scope of the present invention.

### Detailed description of the invention

The inventors of the present invention have surprisingly found that aerated lipid based filling compositions with good organoleptic properties can be prepared by partial or total replacement of fats with a fibre component, preferably in combination with a liquid oil, without compromising the texture and organoleptic properties of the filling, as well as the shelf-life properties (e.g. bloom stability and oiling out) and processability.

The filling compositions of the invention have a firm texture, and a creamy and pleasant mouth feel. The present invention makes it possible to provide sweet and savoury lipid based fillings, which are low in SFA, whilst having good organoleptic parameters.

The fillings of the present invention advantageously have improved, similar or same textural and organoleptic properties to a corresponding solid fats based filling composition.

Oil release, or oil leakage, is an important technological feature of a filling. An increased oil release from the filling leads to a diffusion of oil into the surrounding food matrix, e.g. a biscuit for a sandwich biscuit. Free oil, released from the continuous filling mass, is also detrimental for a proper mouthfeel. Moreover, the amount of released oil over time governs the storage stability of the filling. As shown in the examples of the present invention, the filling compositions of the present invention display advantageous properties in this regard, i.e. similar to or better than the reference filings.

In the present context, the term "filling composition" relates to a pre-prepared composition to be used as one part of a composite product. The filling and the other part(s) of the composite product are composed of different components. Preferably, the filling is surrounded by the other part(s) of the composite product. Alternatively, it may be used as a topping (e.g. open to the air).

The filling compositions of the present invention comprise fibre in an amount (based on the total weight of the filling composition) of between 5.0wt% and 20.0wt%.

In embodiments, the above amounts relate to the amount of fibre composition comprising dietary fibre, i.e. the wt% encompass dietary fibre and any non-fibre components present. In an embodiment, the above amounts relate to the fibre containing composition defined below.

The particle size D90 is used in the conventional sense as the value of the particle size distribution where 10% of the population resides above this point, and 90% resides below this point. The D90 is the size in microns that splits the distribution as defined above. The particle size distribution may be measured by laser light scattering, microscopy or microscopy combined with image analysis. For example, the particle size distribution may be measured by laser light scattering. Since the primary result from laser diffraction is a volume distribution, the D90 cited is a volume-based value.

In a preferred embodiment, laser diffraction is used to measure the particle size, D90 using a Malvern Mastersizer 2000, Method Scirocco 2000 dry attachment, Fraunhofer scattering theory.

In an embodiment of the present invention, the fibre has a D90 particle size of greater than 50 microns and preferably greater than 60 microns; for example greater than 70 microns, greater than 100 microns, or greater than 125 microns.

In an embodiment of the present invention, the fibre has a D90 particle size of less than 300 microns and preferably less than 250 microns; for example less than 200 microns, less than 175 microns, or less than 150 microns.

In an embodiment of the present invention, the fibre has a D90 particle size of from 50 microns to 300 microns, preferably from 60 microns to 250 microns.

In a highly preferred embodiment of the present invention, the fibre has a particle size of between 100 microns and 200 microns and preferably the fibre is an apple fibre.

In an embodiment of the present invention, the fibre is refined to control the particle size; preferably the refining reduces the particle size.

In an embodiment, the refining step provides a particle size of less than 200 microns, preferably less than 100 microns, preferably less than 75 microns and preferably less than 60 microns. In an embodiment, the particle size provided by refining is greater than 10 microns, preferably greater than 25 microns and preferably greater than 30 microns. In a preferred embodiment, the particle size is between 10 microns and 200 microns, preferably between 25 microns and 75 microns.

In a preferred embodiment of the present invention, the fibre comprises dietary fibre.

In an embodiment, the dietary fibre comprises soluble and/or insoluble fibres.

In an embodiment, as in EU regulation 1169/2011, the term fibre relates to carbohydrate polymers with three or more monomeric units, which are neither digested nor absorbed in the human small intestine and belong to the following categories:
- edible carbohydrate polymers naturally occurring in the food as consumed,
- edible carbohydrate polymers which have been obtained from food raw material by physical, enzymatic or chemical means and which have a beneficial physiological effect demonstrated by generally accepted scientific evidence,
- edible synthetic carbohydrate polymers which have a beneficial physiological effect demonstrated by generally accepted scientific evidence.

In an embodiment, the term dietary fibre relates to fibre as measured by AOAC Official Method 991.43 or AOAC 985.29 for total dietary fibre, preferably AOAC 985.29 as modified in Manuel suisse des denrées alimentaires (MSDA), Méthode 468 (2008). It is noted that the method of the MSDA and AOAC 985.29 do not yield differing results as the modifications are minor.

In an embodiment of the present invention, the fibre comprises greater than 35% by weight of the fibre of dietary fibre, preferably greater than 40wt%, preferably greater than 45wt%; for example greater than 50wt%, greater than 55wt% or greater than 60wt%. In an embodiment, the fibre comprises less than 80% by weight of the fibre of dietary fibre, preferably less than 75wt%, preferably less than 70wt%; for example less than 65wt%, less than 60wt% or less than 55wt%. The above amounts relate to total dietary fibre, i.e. the sum of soluble and insoluble portions.

Thus, in an embodiment, the fibre used in the present invention are not solely dietary fibre, i.e. they may be combinations of materials with different macromolecules (protein for example). Accordingly, the fibre may be present in a fibre-comprising composition.

In an embodiment, the dietary fibre is present between 35wt% and 80wt%, between 45wt% and 70wt% or between 55wt% and 65wt% of the fibre-comprising composition.

In an embodiment, the fibre used is not entirely purified, e.g. to one compound, e.g. could be a side-stream material. A side-stream material is generally known as a residual or intermediate material from another process directed to preparing a different material and is often a mixture of compounds.

In an embodiment, the fibre-comprising composition comprises dietary fibre and other non-fibre macromolecules (e.g. protein) and/or other non-fibre carbohydrates (e.g. mono- and di-saccharides).

The non-dietary fibre components may be present in an amount of between 20wt% and 65wt%, between 30wt% and 55wt% or between 35wt% and 45wt% of the fibre-comprising composition.

In an embodiment, the remainder of the fibre (i.e. additional components to the dietary fibre) comprises mono- and di-saccharides, protein, ash and/or mixtures thereof.

Accordingly, the fibre-comprising composition for use in the present invention may comprise between 35wt% and 80wt% dietary fibre and between 20wt% and 65wt% and mono- and di-saccharides, protein, ash and/or mixtures thereof.

In an embodiment, the amount of mono- and di-saccharides may be between 0.0wt% and 30wt% of the fibre-comprising composition. In an embodiment, the amount of protein may be between 2.5wt% and 30.0wt%, preferably between 5.0wt% and 25wt%, of the fibre-comprising composition. The methods used in the examples may be used to determine these amounts.

Accordingly, in an embodiment, the present invention utilizes a fibre in a fibre comprising composition, wherein the composition comprises between 35wt% and 80wt% dietary fibre, 2.5wt% and 30.0wt% protein and 0.0wt% and 30wt% of mono- and di-saccharides, where the % are by weight of the fibre comprising composition.

The at least one fibre comprises a fibre selected from apple, pea, cocoa, blackcurrant, spent grain, wheat bran or combinations thereof, most preferably apple, pea and cocoa and combinations thereof.

In an embodiment, the fibre may be present in a flour produced from the source of the fibre. For example, a flour produced from pea, cocoa, blackcurrant, spent grain, fibres from microorganisms and combinations of these. The flour may comprise between 5% and 100% or substantially consist of the fibre defined above, optionally between 5% and 50% of the fibre.

The fibre and/or fibre source may preferably be in the form of a powder prior to incorporation into a filling composition, preferably with the particle size mentioned above.

In a further preferred embodiment the filling composition has a fat content in the range of 5 to 75 % (w/w - based on the weight of the filling composition), preferably such as 10 to 70% (w/w), such as 10 to 65% (w/w), such as 15 to 55% (w/w), such as 20-60% (w/w), such as 22-50% (w/w), such as 22-45% (w/w), such as 25-40% (w/w), or such as 25-35% (w/w).

In a preferred embodiment, for an aerated filling composition, the fat content is within the range 25-55% (w/w), and more preferably in the range 30-50% (w/w).

In a preferred embodiment of the present invention, the at least one fat comprises at least one solid fat and/or at least one liquid fat.

The term "solid fat" has its standard definition, i.e. a fat that is solid, i.e. stable in shape, at room temperature.

The term "liquid fat" has its standard definition, i.e. a fat that is liquid, i.e. flows to take on the shape of its container, at room temperature (i.e. standard ambient temperature defined below).

The liquid fat used for preparing the filling can be any vegetable oil or fat that is liquid or that can be liquefied at ambient conditions. The oil is suitably a food grade oil. Examples include sunflower oil, rapeseed oil, olive oil, soy oil, soy bean, fish oil, linseed oil, safflower oil, corn oil, algae oil, cottonseed oil, grape seed oil, flaxseed oil, rapeseed oil, primrose oil, linseed oil, avocado oil, a nut oil such as hazelnut oil, walnut oil, macadamia nut oil, or other nut oil, peanut oil, rice bran oil, sesame oil, or combinations thereof. The above oils may be optionally hydrogenated (partially or fully) and optionally inter-esterified.

Optionally, the oil can contain one or more liposoluble compounds; such as for example plant polyphenols, fatty acids, such as n-3 fatty acids, n-6 fatty acids, vitamins, aromas, flavours, antioxidants, other active ingredients. Preferred antioxidants include ascorbic acid, ascorbyl palmitate, citric acid, rosmarin extract, BHA (Butylated hydroxyanisole), BHT (Butylated hydroxytoluene), mixed tocopherol, and EDTA (Ethylenediaminetetraacetic acid).

Preferably, a vegetable oil is used, more preferably an oil with a low SFA content is chosen such as high oleic sunflower oil or high oleic rapeseed oil.

The above liquid oils may have differing oleic acid contents. For example, sunflower oil may be (% by weight): Conventional oil or high linoleic acid: 14.0%<Oleic acid <43.1%, Mid Oleic: 43.1%≤Oleic acid <71.8%, High oleic: 71.8%≤Oleic acid <90.7%, Ultra/Very-high oleic, 90.7≤oleic acid. For example, safflower oil: conventional oil: 8.4%<Oleic acid <21.3%; and High oleic: 70.0%<Oleic acid <83.7%. Additionally, high oleic acid variants of the following oils are available, soybean oil (70.0%≤Oleic acid <90.0%), rapeseed oil (70.0%≤Oleic acid <90.0%), olive oil (70.0%≤Oleic acid <90.0%), canola (70.0%≤Oleic acid <90.0%), and algae oil (80.0%≤Oleic acid <95.0%).

In other embodiments, the liquid oil may be medium-chain triglycerides, preferably triglycerides where the fatty acids have an aliphatic tail of 6-12 carbon atoms. These oils may be obtained from coconut oil, palm kernel oil or milk.

The solid fat is preferably selected from the group consisting of coconut oil, palm kernel oil, palm oil, cocoa butter, butter oil, lard, tallow, oil/fat fractions such as lauric, stearin or olein fractions, hydrogenated oils (partial and full hydrogenation, shea fat, cocoa butter extender fats (for example, approved fats: illipe, kokum gurgi, mango, sal), inter-esterified fats (could be any fats and oils and could be either chemical or enzymatic inter-esterification), and blend of at least two of the above.

In a preferred embodiment, the solid fat is selected from the group consisting of coconut oil, palm kernel oil, palm oil, cocoa butter and blends thereof.

In a further embodiment the filling composition has a solid fat content in the range of 0.5 to 50.0 % (w/w - based on the weight of the filling composition), preferably such as 1.0 to 45.0% (w/w).

In a particularly preferred embodiment, for an aerated filling composition, the solid fat content is within the range between 10 - 45% (w/w), preferably in the range between 12.5-40% (w/w), and more preferably within the range between 15-35% (w/w).

In a further embodiment the filling composition has a liquid fat content in the range of 2.5 to 40.0 % (w/w - based on the weight of the filling composition), preferably such as 4.0 to 35.0% (w/w), such as 5.0 to 30.0% (w/w), such as 7.5 to 25.0% (w/w).

In a particularly preferred embodiment, for an aerated filling composition, the liquid fat content is within the range between 5-25% (w/w), and more preferably within the range between 7.5-22.5% (w/w).

In a preferred embodiment, the filling composition comprises a solid fat and a liquid fat, wherein the weight ratio of liquid fat to solid fat is 1.0:0.50 to 1.0:5.0, preferably 1.0:0.60 to 1.0:4.5, more preferably 1.0:0.75 to 1.0:4.0, more preferably 1.0:0.80 to 1.0:3.75, more preferably 1.0:0.75 to 1.0:3.5, more preferably 1.0:0.85 to 1.0:3.25, more preferably 1.0:0.90 to 1.0:3.25, more preferably 1.0:0.95 to 1.0:3.10, more preferably 1.0:0.95 to 1.0:3.05 and most preferably 1.0:1.0 to 1.0:3.0. For example, between 1.0:0.60 and 1.0:2.00.

The textural properties of the filling may depend, amongst other factors, on the ratios of fibre, solid fat and liquid oil. The texture of the filling can easily be adjusted by adjusting the ratios of fibre, solid fat and liquid oil. For instance, an increase in liquid oil yields more fluid fillings, whereas an increase of solid fat yields firmer fillings. Preferably, a certain amount of liquid oil is preferred to obtain a continuous filling instead of a particulate mass.

The filling compositions of the present invention may be used partially or totally in place of the usual solid fats in known filling composition or in place of known filling compositions in foodstuffs. Preferred solid fat replacement ratios are from about 1% to 100% by weight, preferably from about 15% to 100%, about 20% to 75%, or about 25% to 60 %. Preferred replacement rations depend amongst others on the desired texture and other organoleptic properties of the filling composition.

In a preferred embodiment, the filling composition of the present invention may be used to replace a portion of a filling composition comprising a nut-based component, preferably a peanut and/or hazelnut.

Surprisingly, it has been found that the filling compositions of the present invention may be used to replace a portion of a nut-based filling composition without impacting the organoleptic properties (specifically taste and texture). In an embodiment, the nut-based component may be peanut butter, peanut paste, peanut oil, hazelnut oil, and/or hazelnut paste. This provides healthier fillings and, in the case of hazelnut, less expensive fillings. In a preferred embodiment, the filling composition of the present invention may replace between 1% and 60% by weight of a nut-based filling in a foodstuff, preferably between 5% and 55%.

One beneficial feature of the present invention is the flexibility of the approach in terms of ingredients. The present invention is not related to particular fat fractions or crystallizing agents. In the present invention, any type of oil with a desired degree of saturation can be used. In doing so, a significant reduction in SFA content compared to a lipid based filling based on conventional solid fats can be obtained, such as much as 30-40% reduction, even a 50% reduction or higher. For instance, fat-based fillings with an SFA content as low as that of a high oleic sunflower oil (about 8 % w/w SFA) can be obtained.

The filling composition of the present invention is aerated.

The term "aerated" means that the filling composition comprises a gas, preferably air, that has been charged into the composition preferably using an aeration device as defined below.

In an embodiment of the present invention, the filling composition is aerated to greater than 25%, preferably greater than 30%, preferably greater than 35% and more preferably greater than 40%. In an embodiment, the filling composition is aerated to less than 70%, preferably less than 65%, and more preferably less than 60%. For example, the degree of aeration is between 25% and 70%, more preferably between 35% and 60%.

The aeration degree is calculated based on the weight change of the non-aerated and aerated mass at a certain volume, preferably 26 ml, aeration ratio = (Weight before aeration - Weight after aeration)x100/Weight before aeration.

Alternatively, the degree of aeration may be measured by x-ray tomography. Alternatively, the composition may be weighed in its aerated form, the gas may be removed under reduced pressure, for example, and the composition re-weighed.

The aeration may be carried out using an aeration device, optionally a Hobart N50CE mixer, preferably with a wire whisk attachment. The type of aeration device is not particularly limiting and depends upon the scale of manufacture, it is the aeration level that is important.

Alternatively, a closed type of aeration device comprising a rotor and stator from Mondomix, from Tanis with air injection, or a suitable mixer from Oakes may be used.

As mentioned above, the type of aeration device may, of course, be modified if the production is desired on an industrial scale, what is important is the aeration degree mentioned above is reached.

In an embodiment, the aeration is carried out at an RPM of between 230 and 330, more preferably between 250 and 300. In an embodiment, the aeration is carried out for a period of between 30 seconds and 2 minutes, preferably between 45 seconds and 1 minute 30 seconds. Preferably, the above settings are applied to the Hobart N50CE mixer mentioned above.

Generally, aeration of fats is dictated by the amount of fat crystals present in the system. It typically assumed that desired aeration takes place when there is at least 5% by weight solid fat content in the fat mixture and generally significantly more than 5% by weight SFC.

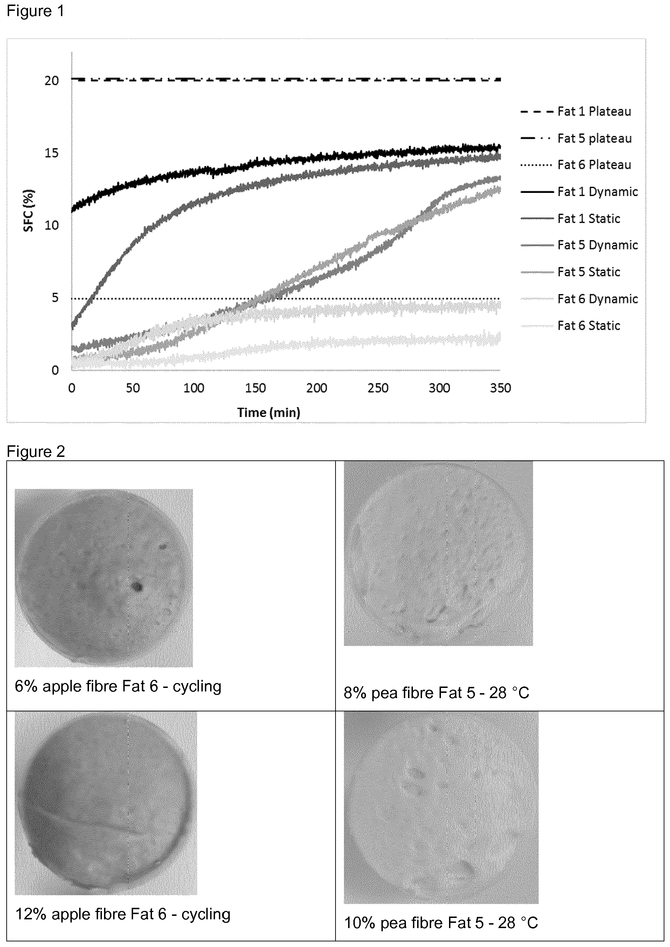

However, the present invention enables the provision of aeration and stable aeration underlining the importance of the part the fibres play in the stabilization of the foam. This is shown in Figure 1.

The filing composition, or filling cream, of the invention may be sweet, e.g. a confectionary filling for use in a composite product such as a sandwich, a biscuit, a wafer, or other composite confectionary product. The filling composition, or cream, according to the invention may alternatively be savory, such as a filling for a bakery product or a sandwich cracker, or a lipid based topping, e.g. for use on top of a composite product, or a spread.

Depending on the specific type of filling composition, different types of ingredients may be supplemented to the filling composition.

For instance typical savory filling compositions may further comprise supplementary ingredients such as salt, maltodextrin, skimmed milk powder, full cream milk powder (FCMP), whey powder, cheese powder, natural or synthetic flavors, natural or artificial colors, starch based fillers, emulsifiers such as lecithin, and other ingredients.

Typical total fat content of a savoury filling is about 5 - 70% (w/w), preferably 15 - 55% (w/w), more preferably 20 - 50%(w/w).

In some embodiments, the filling composition may have a salt content in the range 0-2% by weight of the filling composition. In a more specific embodiment, the salt is sodium chloride.

For instance typical sweet filling compositions may further comprise supplementary ingredients such as solid fats, sugar, fat, skimmed milk powder, full cream milk powder, whey powder, fruit acids, cocoa powder, natural or synthetic flavors, natural or artificial colors, starch based fillers, emulsifiers such as lecithin, and other ingredients. The sugar is typically one or more of sucrose, dextrose, maltodextrin and/or lactose, preferably sucrose. Generally, the major ingredients of a sweet filling are sugar and fat. Preferred total fat content of a sweet filling is about 5 - 75% (w/w - based on the weight of the sweet filling), preferably 15 - 55% (w/w), and more preferably 20 - 50% (w/w). Preferred solid fats for a sweet filling include coconut oil, palm kernel oil, palm oil, cocoa butter, butter oil, lard, tallow, oil / fat fractions such as lauric or stearic fractions, hydrogenated oils, and blends thereof.

In preferred embodiments, the sweet filling comprises an amount of sugar of about 10% to 70% w/w based on the total weight of the filling, preferably from about 15% to 60% w/w, such as from about 20% to 50% w/w, such as from about 25% to 45% w/w sugar.

In a particular embodiment, the filling composition comprises cocoa powder, preferably from 1.0% to 70% of cocoa powder by weight, optionally from 2.0% to 20.0%.

The mixing of the ingredients can be carried out by conventional mixing, refining, and/or aeration methods, for instance using standard industrial mixing apparatus.

In a preferred embodiment of the present invention, provided is a process for producing the filling composition of the present invention comprising the steps of mixing the solid components (optionally comprising fibre) with at least a portion of the fat component, refining the mixture, and optionally combining with the fibre and any remaining fat, along with any remaining ingredients.

In a preferred embodiment, provided is a process that comprises the steps of optionally melting any solid fats present and mixing between 50-75% by weight of the fats with the solid components (preferably sugar and milk powder, optionally comprising fibre), refining the mixture, and optionally combining with the fibre and any remaining fat, along with any remaining ingredients.

A preferred embodiment of the present invention comprises the steps of:
- optionally melting any solid fat present and optionally combining multiple fats if more than one fat is present,
- mixing a portion of the fat with any dry components present, excluding the at least one fibre,
- refining the mixture,
- mixing the refined mass with the remainder of the fat and the at least one fibre and an optional emulsifier to obtain the filling composition, and
- aerating the composition.

A preferred embodiment of the present invention comprises the steps of:
- optionally melting any solid fat present and optionally combining multiple fats if more than one fat is present,
- mixing a portion of the fat with any dry components present including the at least one fibre,
- refining the mixture,
- mixing the refined mass with the remainder of the fat and an optional emulsifier to obtain the filling composition, and
- aerating the composition.

A preferred embodiment of the present invention comprises the steps of:
- optionally melting any solid fat present and optionally combining multiple fats if more than one fat is present,
- optionally dissolving an emulsifier in the fat
- mixing the fat with any dry components present including the at least one fibre,
- refining the mixture, preferably with a ball mill,
- optionally sieving the composition, and
- aerating the composition.

In a preferred embodiment, the portion of fat in the second step is between 50-75% by weight of the total fat mixture. In a preferred embodiment, the emulsifier is present and is preferably lecithin.

In a preferred embodiment, the refining step provides a particle size of less than 200 microns, preferably less than 100 microns, preferably less than 75 microns and preferably less than 60 microns. In an embodiment, the particles size provided by refining is greater than 10 microns, preferably greater than 25 microns and preferably greater than 30 microns. In a preferred embodiment, the particle size is between 10 microns and 200 microns, preferably between 25 microns and 75 microns.

The refining may be carried out by any appropriate refining apparatus for the production of foodstuffs with the above particle sizes, for example, a 2-roll and/or 5-roll refiner. Alternatively, with a ball mill, preferably a Wiener ball mill, preferably a temperature greater than room temperature, preferably between 40°C and 60°C.

The sieving may preferably be carried out using a sieve with a 0.6 mm or less mesh size, preferably a 0.5 mm or less mesh size, and preferably a 0.2 mm or greater mesh size, most preferably a 0.4 mm sieve mesh size.

An embodiment of the present invention provides a foodstuff comprising the filling composition of the present invention, preferably the foodstuff is a confectionery product, preferably a chocolate (or equivalents thereof, such as compound) product.

In a highly preferred embodiment, the present invention provides a filled chocolate shell, filled with the filling of the present invention.

In a preferred embodiment, the filling of the present invention is not-baked, i.e. it is not included in a foodstuff which requires further cooking after the filling has been deposited.

In an embodiment, provided is a filled foodstuff product, preferably a filled chocolate product, preferably a chocolate shell filled with the filling of the invention, that comprises from 5 to 95% by weight of the product of the filling of the invention, preferably from 10 to 90%, preferably from 20 to 70% or from 30 to 50%.

Optionally the remainder of the product being a shell of chocolate-like material such as compound or chocolate that substantially encloses (for example completely encloses) the product. Hence, in an embodiment, the chocolate-like material may comprise from 5 to 95% by weight of the product, preferably from 10 to 90%, preferably from 30 to 80% or from 50 to 70%.

Another embodiment of the invention provides a chocolate confectionery product, which comprises a filling of the present invention surrounded by an outer layer of a chocolate product, for example, a praline, chocolate shell product, a truffle, a filled-tablet and/or chocolate coated wafer or biscuit any of which may or may not be layered. The chocolate coating can be applied or created by any suitable means, such as enrobing, cold stamping (frozen cone, cold forming, etc.) or moulding.

In an embodiment, compositions of the invention may usefully be chocolate products (as defined herein), more usefully be chocolate or a chocolate compound. Independent of any other legal definitions that may be used compositions of the invention that comprises a cocoa solids content of from 25% to 35% by weight together with a milk ingredient (such as milk powder) may be informally referred to herein as 'milk chocolate' (which term also encompasses other analogous chocolate products, with similar amounts of cocoa-solids or replacements therefor). Independent of any other legal definitions that may be used compositions of the invention that comprises a cocoa solids content of more than 35% by weight (up to 100% (i.e. pure cocoa solids) may be informally referred to herein as 'dark chocolate' (which term also encompasses other analogous chocolate products, with similar amounts of cocoa-solids or replacements therefor).

The term 'chocolate' as used herein denotes any product (and/or component thereof if it would be a product) that meets a legal definition of chocolate in any jurisdiction and also include product (and/or component thereof) in which all or part of the cocoa butter (CB) is replaced by cocoa butter equivalents (CBE) and/or cocoa butter replacers (CBR).

The term 'chocolate compound' as used herein (unless the context clearly indicates otherwise) denote chocolate-like analogues characterized by presence of cocoa solids (which include cocoa liquor/mass, cocoa butter and cocoa powder) in any amount, notwithstanding that in some jurisdictions compound may be legally defined by the presence of a minimum amount of cocoa solids.

The term 'chocolate product' as used herein denote chocolate, compound and other related materials that comprise cocoa butter (CB), cocoa butter equivalents (CBE), cocoa butter replacers (CBR) and/or cocoa butter substitutes (CBS). Thus, chocolate product includes products that are based on chocolate and/or chocolate analogues, and thus for example may be based on dark, milk or white chocolate.

Unless the context clearly indicates, otherwise it will also be appreciated that in the present invention, any one chocolate product may be used to replace any other chocolate product and neither the term chocolate nor compound should be considered as limiting the scope of the invention to a specific type of chocolate product. Preferred chocolate product comprises chocolate and/or compound, more preferred chocolate product comprises chocolate, most preferred chocolate product comprises chocolate as legally defined in a major jurisdiction (such as Brazil, EU and/or US).

In another preferred embodiment of the invention the foodstuff comprises a multi-layer coated chocolate product comprising a plurality of layers of wafer, chocolate product, biscuit and/or baked foodstuff, with filling sandwiched between them, with at least one layer or coating being a chocolate product (e.g. chocolate). Most preferably the multi-layer product comprises a chocolate product confectionery product (e.g. as described herein) selected from sandwich biscuit(s), cookie(s), wafer(s), muffin(s), extruded snack(s) and/or praline(s). An example of such a product is a multilayer laminate of baked wafer and/or biscuit layers sandwiched with filling(s) and coated with chocolate.

According to another aspect, there is provided a composite product comprising the filling composition according to the invention. The composite product may be, for instance, a sandwich, biscuit, cracker, wafer, or bakery foodstuff product comprising the filling composition of the invention as a filling or as a topping.

Specifically, baked foodstuffs used in the invention may be sweet or savoury. Preferred baked foodstuffs may comprise baked grain foodstuffs, which term includes foodstuffs that comprise cereals and/or pulses. Baked cereal foodstuffs are more preferred, most preferably baked wheat foodstuffs such as wafer(s), cracker(s), cookie(s), muffin(s), extruded snack(s) and/or biscuit(s).

Wafers may be flat or shaped (for example into a cone or basket for ice cream) and biscuits may have many different shapes. More preferred wafers are non-savoury wafers, for example having a sweet or plain flavour.

A non limiting list of those possible baked foodstuffs used in the present invention are selected from: biscuits, cakes, breads, pastries and/or pies; such as from the group consisting of: rusk, saltine, pretzel, ANZAC biscuit, biscotti, flapjack, kurabiye, lebkuchen, leckerli, macroon, bourbon biscuit, butter cookie, digestive biscuit, custard cream, extruded snacks, florentine, garibaldi gingerbread, koulourakia, kourabiedes, Linzer torte, muffin, oreo, Nice biscuit, peanut butter cookie, polvorón, pizzelle, pretzel, croissant, shortbread, cookie, fruit pie (e.g. apple pie, cherry pie), lemon drizzle cake, banana bread, carrot cake, pecan pie, apple strudel, baklava, berliner, bichon au citron and/or similar products

In a preferred embodiment of the present invention, the baked product is a biscuit or a cookie.

One embodiment of the invention provides a multi-layer product optionally comprising a plurality of layers of baked foodstuff (preferably selected from one or more wafer and/or biscuit layers), and a coating layer located around these layers, wherein the filling composition of the invention is present between at least two of the layers of baked foodstuff and/or a layer of the baked foodstuff and the coating layer, preferably the coating layer is a chocolate product.

Unless defined otherwise, all technical and scientific terms used herein have and should be given the same meaning as commonly understood by one of ordinary skill in the art to which this invention belongs.

Unless the context clearly indicates otherwise, as used herein plural forms of the terms herein are to be construed as including the singular form and vice versa.

In all ranges defined above, the end points are included within the scope of the range as written. Additionally, the end points of the broadest ranges in an embodiment and the end points of the narrower ranges may be combined.

It will be understood that the total sum of any quantities expressed herein as percentages cannot (allowing for rounding errors) exceed 100%. For example the sum of all components of which the composition of the invention (or part(s) thereof) comprises may, when expressed as a weight (or other) percentage of the composition (or the same part(s) thereof), total 100% allowing for rounding errors. However where a list of components is non exhaustive the sum of the percentage for each of such components may be less than 100% to allow a certain percentage for additional amount(s) of any additional component(s) that may not be explicitly described herein.

The term "substantially" as used herein may refer to a quantity or entity to imply a large amount or proportion thereof. Where it is relevant in the context in which it is used "substantially" can be understood to mean quantitatively (in relation to whatever quantity or entity to which it refers in the context of the description) there comprises an proportion of at least 80%, preferably at least 85%, more preferably at least 90%, most preferably at least 95%, especially at least 98%, for example about 100% of the relevant whole. By analogy the term "substantially-free" may similarly denote that quantity or entity to which it refers comprises no more than 20%, preferably no more than 15%, more preferably no more than 10%, most preferably no more than 5%, especially no more than 2%, for example about 0% of the relevant whole. Preferably, where appropriate (for example in amounts of ingredient) such percentages are by weight.

As used herein, unless the context indicates otherwise, standard conditions for measuring if a fat is liquid or solid, means, atmospheric pressure, a relative humidity of 50% ±5%, ambient temperature (22°C ±2°) and an air flow of less than or equal to 0.1m/s. Unless otherwise indicated all the tests herein are carried out under standard conditions as defined herein.

It should be noted that embodiments and features described in the context of one of the aspects or embodiments of the present invention also apply to the other aspects of the invention.

All patent and non-patent references cited in the present application, are hereby incorporated by reference in their entirety.

The invention will now be described in further details in the following non-limiting examples.

### EXAMPLES

In all the examples below only examples falling within the scope of the claims (the filling comprising between 5.0 and 20.0 wt% of the at least one fibre, wherein the at least one fibre comprises a fibre selected from apple, pea, cocoa, blackcurrant, spent grain, wheat bran or combinations thereof) are considered as part of the present invention.

### Viscosity test

The rheological properties of the fillings were assessed using Anton Paar Physicas (MCR 302) with vane geometry a 45 °C. The apparent viscosity (Pa·s) was measured as function of increasing shear rate from 2 to 30 s-1 (ramp up) within 5 min. The shearing at 30 s-1 was held for 3 min after which the shear rate was decreased from 30 to 2 s-1 (ramp down), again for 5 min. To homogenize the filling, before the rump up and rump down a pre-shear step was introduced and the shear kept constant at 5 s-1 for 15 min. Measurements were carried out in duplicate.

### Texture analysis

Fillings samples have been collected in plastic cups (30 mL) for texture analysis. The samples have been let to equilibrate at 20 C and 65% relative humidity for 1 week.

A Texture Analyser (TAXT Plus) with a 5 kg load cell and a 4 mm diameter stainless steel cylinder probe (p/4) is used for the penetration test. The maximum force in penetration at room temperature is measured. A pre-test speed of 1.00 mm/sec, test speeds of 2.00 mm/sec and post-test speed of 2.00 mm/sec are used. The distance of penetration 12.0 mm, and the trigger force is 1.5 g. The maximum force for a 12 mm penetration is measured. The area under the curve between the starting point of measurement (0 mm) and a depth of 12 mm is also recorded. The sample is hold with two fingers, to avoid the sample sticking as a whole to the probe during the upward movement. The average values are taken out of at least 6 replicates.

### Bloom

The Bloom was assessed by means of DigiEye system (VeriVide), with a D7000 Nikon Corporation, Japan (16.2 megapixel) camera and an illumination box and using software version 2.7.4.0. The samples were measured against a grey surround (L=50) and white background. 10 chocolate samples were placed in the instrument, and a picture taken at different times: week 1, week 10, week 20 etc. The color of the chocolate was measured by selecting the area of the single chocolate. The instrument then transform the color images in the RGB system into color space parameters: L*a*b* where: L* is the luminance or lightness component which ranges from 0 (black) to 100 (white), and parameters a* (from greenness to redness), and b* (blueness to yellowness) are the two chromatic components, which in this case range from -120 to +120. The entire image of the surface of chocolates was measured and analyzed using the instrument and the mean values of L*, a* and b* reported. The Whiteness Index (WI) was calculated from the expression WI = 100 - [(100 - L*)^2 + a*^2 + b*^2]^0.5. The delta WI was determined by subtracting the value of the mean WI calculated on the 10 samples in week 1 from the mean WI calculated on the 10 samples in the later week.

### Reference Example 1a - Preparation of a Filling

A filling was prepared by the following process steps:
1. the fats were melted and mixed,
2. 2/3 of the fat was added to the dry mix (sugar, hazelnut paste, skimmed milk, cocoa powder) and stirred in a Hobart mixer at room temperature,
3. the mix was refined in a 2 roll refiner, and
4. the refined mass was mixed with the rest of the fat and lecithin in a Hobart mixer and mixed for 60 min to obtain the final confectionery filling

| | |
|---|---|
| Sugar White | 440 g |
| Hazelnut Paste | 270 g |
| Palm oil | 160 g |
| Skimmed Milk Powder | 60 g |
| Oil Palm Revel A, Non Hydrogenated | 20 g |
| Cocoa Powder | 45 g |
| Lecithin Sunflower | 5 g |
| Total | 1000g |

### Reference Example 1b

Prepared as for Reference Example 1a:

| | |
|---|---|
| FAT CONTENT | 36.42 |
| TC50 (palm fat) | 19.78 |
| lecithin sunflower | 0.50 |
| sugar white | 30.62 |
| Skimmed Milk Powder | 32.46 |
| High oleic sunflower oil | 16.64 |
| Total | 100.00 |

### Examples 2 to 11

Compositions were prepared as above with the exception of adding fibre at step 4.

| | | |
|---|---|---|
| 70% SO 30% TC50 | TOT FAT | 314.19 g |
| TC50 (palm fat) | | 94.26 g |
| lecithin sunflower | | 5.03 g |
| sugar white | | 306.23 g |
| Skimmed milk powder | | 324.54 g |
| High oleic sunflower oil | | 219.93 g |
| FIBRES | | 50.00 g |
| Total | | 1000.00 g |

Further examples were prepared with 10% and 15% fibre by increasing the fibre content to 100g and decreasing all of the other components by the same relative amounts.

### FIBRE SAMPLES 10%

| | | |
|---|---|---|
| 70% SO 30% TC50 | TOT FAT | 264.19 g |
| FIBRE 10% | | 10 g |
| TC50 (palm fat) | | 79.26 g |
| lecithin sunflower | | 5.03 g |
| sugar white | | 306.23 g |
| Skimmed milk powder | | 324.54 g |
| High oleic sunflower oil | | 184.93 g |
| FIBRES | | 100.00 g |
| TOT | | 1000.00 g |

### FIBRE SAMPLES 15%

| | | |
|---|---|---|
| TC50 (palm fat) | | 64.26 g |
| lecithin sunflower | | 5.03 g |
| sugar white | | 306.23 g |
| Skimmed milk powder | | 324.54 g |
| High oleic sunflower oil | | 149.93 g |
| FIBRES | | 150.00 g |
| TOT | | 1000.00 g |

Part of the filling was used to prepare chocolates for blooming test:
1. 1g of milk chocolate shell was prepared
2. filling was then deposited and the samples were placed in the fridge 2°C for 30 min
3. 1g of milk chocolate was used to back off the samples to finish the product and stored again in the fridge at 2°C for 30 min

The rest of the filling was placed in plastic pots for texture analysis and rheology tests.

| | Ex. 1a (Ref) | Ex. 2 | Ex. 3 | Ex. 4 | Ex. 5 | Ex. 6 |
|---|---|---|---|---|---|---|
| Fibre origin | - | Apple AF401 | Pea | Cocoa | Blackcurrant | Spent Grain |
| Total Fat (%) | 35.53 | 32.25 | 32.25 | 32.25 | 32.25 | 32.25 |
| Viscosity @ 45C (Pas) | 4.5 | 9.93 | 9.93 | 10.31 | 12.28 | 12.60 |
| Texture @20C (N sec) | 3.7 | 0.102 | 0.045 | 0.199 | 0.109 | 0.058 |
| Bloom after 10 weeks (delta white index) | 0.84±0.26 | 1.19±0.53 | 1.77±0.59 | 1.48±0.56 | 1±0.33 | 1.39±0.29 |

| | Ex. 1a (Ref) | Ex. 7 | Ex. 8 | Ex. 9 | Ex. 10 | Ex. 11 |
|---|---|---|---|---|---|---|
| Fibre origin | - | Apple AF401 | Pea | Cocoa | Blackcurrant | Spent Grain |
| Total Fat (%) | 35.53 | 27.33 | 27.33 | 27.33 | 27.33 | 27.33 |
| Viscosity @ 45C (Pa s) | 4.5 | 22.98 | 23.15 | 23.75 | 35.09 | 34.42 |
| Texture @20C (N sec) | 3.7 | 0.30 | 0.18 | 0.37 | 0.42 | 0.37 |
| Bloom after 10 weeks (delta white index) | 0.84±0.26 | 1.32±0.56 | 1.51±0.40 | 0.84±0.39 | 1.27±0.56 | 0.58±0.23 |

### Nutritionals:

| | **Reference Example 1a** | **Example 2** | **Exampl e 3** | **Example 4** | **Ref vs. Ex. 2** | **Ref vs. Ex. 3** | **Ref vs. Ex. 4** |
|---|---|---|---|---|---|---|---|
| | **100** | **100** | **100** | **100** | **% Difference** | | |
| Energy (kcal) | 560.97 | 541.54 | 538.01 | 537.46 | -3.5 | -4.1 | -4.2 |
| Protein (g) | 7.34 | 11.92 | 12.04 | 12.46 | 62.4 | 64.0 | 69.8 |
| Carbohydrate (g) | 52.01 | 49.54 | 48.58 | 47.93 | -4.7 | -6.6 | -7.8 |
| Fibre (g) | 2.14 | 2.75 | 3.31 | 2.87 | | | |
| Sugar (g) | 48.39 | 48.03 | 47.78 | 47.86 | -0.7 | -1.3 | -1.1 |
| Fat (g) | 35.53 | 32.25 | 32.1 | 32.21 | -9.2 | -9.7 | -9.3 |
| Saturated Fat (g) | 11.3 | 6.66 | 6.62 | 6.68 | -41.1 | -41.4 | -40.9 |

| | **Reference Example 1a** | **Example 7** | **Example 8** | **Example 9** | **Ref Ex. 7** | **Ref Ex. 8** | **Ref vs. Ex. 9** |
|---|---|---|---|---|---|---|---|
| | **100** | **100** | **100** | **100** | **% Difference** | | |
| Energy (kcal) | 560.97 | 511.19 | 504.14 | 503.04 | -8.87 | -10.13 | -10.3 |
| Protein (g) | 7.34 | 12.12 | 12.36 | 13.21 | 65.12 | 68.39 | 80.0 |
| Carbohydrate (g) | 52.01 | 51.29 | 49.38 | 48.07 | -1.38 | -5.06 | -7.6 |
| Fibre (g) | 2.14 | 5.5 | 6.62 | 5.74 | | | |
| Sugar (g) | 48.39 | 48.28 | 47.79 | 47.95 | -0.23 | -1.24 | -0.9 |
| Fat (g) | 35.53 | 27.4 | 27.11 | 27.33 | -22.88 | -23.70 | -23.1 |
| Saturated Fat (g) | 11.3 | 5.69 | 5.6 | 5.73 | -49.65 | -50.44 | -49.3 |

| **FIBRE** | **FRUCTOSE** | **GLUCOSE** | **SUCROSE** | **PROTEIN** | **ASH** | **INSOLUBLE** | **SOLUBLE** | **TOTAL DF** |
|---|---|---|---|---|---|---|---|---|
| **Blackcurrant** | 1.66 | 0.83 | 0.53 | 13.59 | 2.11 | 50.92 | 10.05 | 60.97 |
| **Spent Grain** | | 0.39 | | 19.39 | 3.23 | 42.83 | 2.38 | 45.21 |
| **Apple AF401** | 15.39 | 5.7 | 7.31 | 5.09 | 1.44 | 38.64 | 8.54 | 47.18 |
| **Pea EF100** | 0.47 | 0.46 | | 10.08 | 2.57 | 54.48 | 5.69 | 60.17 |
| **Cocoa** | | | | 16.36 | 13.25 | 40.18 | 16.77 | 56.95 |

Dietary fibre content was measured by MSDA, Method 468 (2008). Ash content by MSDA, 1985, Ash determination, Dietetic food products, Chapter 22,method 2.3.

HPAEC-PAD to determine the sugar contents using the procedure: Samples are dissolved in deionised water at a pH above at room temperature, heated at 70°C for 27 minutes, cooler and centrifuged and a diluted aliquot is prepared. The aliquot is filtered using a 0.2 micron syringe and sugars are separated using an anion exchange polystyrene-divinylbenzene column with aqueous sodium hydroxide as eluent and the eluted carbohydrates are detected using PAD.

Protein was determined using ISO/FDIS 16634 (conversion factor 6.25).

The fibres were: Fibre Apple Powder VITACEL^{®} AF 401, Fibre Pea Powder VITACEL^{®} EF 100, FICAO-Cocoa Fibre. The remaining fibres were prepared internally.

All samples including the reference samples displayed a slight amount of bloom after 10 weeks and 12 weeks (20°C, 65% RH). The bloom results for the samples within the scope of the invention were generally comparable with the reference examples, i.e. no significant impact on bloom stability, with certain samples being superior.

For Examples 2 to 11, the viscosity increase was different depending on the type of fibre, in all cases the viscosity obtained was within the process limits. For the 10% fibre compositions, apple, pea and cocoa fibres have a lower viscosity at 45°C, which makes them more processable, while spent grain and blackcurrant show a higher viscosity. Processability of the 15% samples was decreased due to the increase in viscosity but still within the process limits for sample production.

In all cases, the fillings with fibres had better nutritional properties and a softer texture.

For the 10% fibre compositions, apple, pea and cocoa fibres have a lower viscosity at 45°C, which makes them more processable, while spent grain and blackcurrant show a higher viscosity. Processability of the 15% samples was decreased due to the increase in viscosity but still within the process limits for sample production.

The addition of 5% blackcurrant, cocoa and apple fibres gave the same stability to chocolate bloom compared to the Reference after 2 months. Pea and spent grain fibres gave more bloom.

With 10% cocoa and spent grain fibres the bloom stability was increased relative to the 5% examples, while blackcurrant, apple and pea fibres in the fillings the bloom stability was the same.

For the 15% samples, Examples 12 to 16, all samples showed an improved bloom stability, with the cocoa and spent grain fibres being superior to the reference sample and the blackcurrant, pea and apple being comparable.

After 12 weeks, the blackcurrant samples showed less bloom than the other fibre samples.

### Examples 17 to 21

Examples 7 to 9 were repeated but with the following different production process (Examples 17 to 19):
1. the fats were melted and mixed,
2. 2/3 of the fat was added to the sugar, skimmed milk powder mix and fibres and stirred in a Hobart mixer at room temperature,
3. the mix was refined in a 2 roll refiner until a 50 micron particle size distribution was reached, and
4. the refined mass was mixed with the rest of the fat and lecithin was added in a Hobart mixer and mixed for 60 min to obtain the final confectionery filling

Example 7 was repeated with a change in the apple fibre to apple fibre preparation PectoCELL^{™} ACF060N6 (Example 20) and was repeated again with the above different production process with apple fibre preparation PectoCELL^{™} ACF060N6 (Example 21). The apple fibre contained 62% dietary fibre and had a D50 of under 60 microns.

### Example 22

Aerated fillings were produced using the equipment described below.

Fibre type, concentration, and particle size are altered to replace fat only. The milk powder and sugar is aimed to be refined to 50 micron.

In the trials 1-4 fibres are added during refining, in trials 5-8, the fibres are added after refining. Reference 1 is the commercial available reference. Reference 2 and 3 are fillings without fibre, but with the same fat content as the fillings with 12 % fibre, to study the effect of lower fat content. Therefore, reference 2 and 3 contain increased levels of sugar and milk.
Fat 5: Illexao^{™} HS90 (blend comprising shea, illipe and palm oil):Palm Oil (Fritex 24):High Oleic Sunflower Oil (HOSO) (25:50:25),
Fat 6: Palm fat (Chocofill^{™} TC50 vegetable fat):HOSO (50:50).

Fat 1: Deliair^{™} NH30 (non-lauric vegetable fats, palm and shea).

| **Trial** | **Fat/fibre %** | **Fat type** | **Fibre type** | **Aimed particle size of fibre** |
|---|---|---|---|---|
| 1 | 39/6 | Fat 5 | Apple | Refined (50 micron) |
| 2 | 37/8 | Fat 5 | Pea | Refined (50 micron) |
| 3 | 33/12 | Fat 6 | Apple | Refined (50 micron) |
| 4 | 35/10 | Fat 6 | Pea | Refined (50 micron) |
| 5 | 33/12 | Fat 5 | Apple | Unrefined (>100 micron) |
| 6 | 35/10 | Fat 5 | Pea | Unrefined (>100 micron) |
| 7 | 39/6 | Fat 6 | Apple | Unrefined (> 100 micron) |
| 8 | 37/8 | Fat 6 | Pea | Unrefined (>100 micron) |

| **References** | **Fat/fibre (%)** | **Fat type** | **Comment** | **Particle size of filling** |
|---|---|---|---|---|
| 1 | 45/0 | Fat 1 | Commercial reference | 50 micron |
| 2 | 33/0 | Fat 5 | Increased milk and sugar | 50 micron |
| 3 | 33/0 | Fat 6 | Increased milk and sugar | 50 micron |

| **Fat type** | **SFA (%)** | **MUFA (%)** | **PUFA (%)** |
|---|---|---|---|
| Fat 1 | 45 | 43 | 7 |
| Fat 5 | 39 | 48 | 8 |
| Fat 6 | 32 | 58 | 9 |

The recipe of the trials without fibres is given above.

The sugar, milk and part of the fat (24% fat content during refining) are mixed together in a Morton 130l mixer (Morton Mixers & Blenders Ltd., Bellshill, UK) until a mass temperature of 45 °C is reached. The fats have been melted prior to the trials. Then, the mass is refined using a 2-roll refiner for pre-refining, and a 5-roll refiner (Bühler Ltd., London, UK) for the final refining. The particle size during the refining is checked with a Malvern Mastersizer. When the desired particle size is reached, the refined mass is put in the Morton mixer again together with the rest of the fat and the lecithin (and fibres in trial 5-8) until the temperature of 45 °C is reached. The cream is mixed for at least 8 minutes.

The final filling, which is formed in the mixer, is sieved (4 mm), and then put in a heated hopper (50 °C) from where the filling is pumped to a scraped surface heat exchanger (Terlet Terlotherm), to induce some crystal formation. The mass is then pumped into an aeration mixer (Mini Mondo mix), where nitrogen gas is introduced during mixing and cooling. The mixer is cooled with a water jacket. The temperatures of cooling depend on the properties of the fats used. After the mixing the aerated filling is deposited into the sample pots that are used for the stability tests. The samples are put at 8 °C for 10 minutes, directly after the aeration. After this the samples are maturated for one week at 20 °C.

Aeration temperature, maximum aeration level, filling particle size obtained (d0.9) are given below.

| **Fibre filling recipes** | **1** | **2** | **3** | **4** | **5** | **6** | **7** | **8** | **R1** | **R2** | **R3** |
|---|---|---|---|---|---|---|---|---|---|---|---|
| Fat 1 | 0 | 0 | 0 | 0 | 0 | 0 | 0 | 0 | 45 | 0 | 0 |
| Fat 5 | 39 | 37 | 0 | 0 | 33 | 35 | 0 | 0 | 0 | 33 | 0 |
| Fat 6 | 0 | 0 | 33 | 35 | 0 | 0 | 39 | 37 | 0 | 0 | 33 |
| Apple Fibre | 6 | 0 | 12 | 0 | 12 | 0 | 6 | 0 | 0 | 0 | 0 |
| Pea Fibre | 0 | 8 | 0 | 10 | 0 | 10 | 0 | 8 | 0 | 0 | 0 |
| sugar white | 37 | 37 | 37 | 37 | 37 | 37 | 37 | 37 | 37 | 45.1 | 45.1 |
| Whole milk | 10 | 10 | 10 | 10 | 10 | 10 | 10 | 10 | 10 | 12.2 | 12.2 |
| SMP | 7.6 | 7.6 | 7.6 | 7.6 | 7.6 | 7.6 | 7.6 | 7.6 | 7.6 | 9.3 | 9.3 |
| Lecithin sunflower | 0.4 | 0.4 | 0.4 | 0.4 | 0.4 | 0.4 | 0.4 | 0.4 | 0.4 | 0.4 | 0.4 |
| Fibres refined | Y | Y | Y | Y | N | N | N | N | - | - | - |

| Samples | Aeration level (%) | Aeration temperature | Particle size of filling (micron) |
|---|---|---|---|
| 1 | 43 | 22 | 49.4 |
| 2 | 43 | 22 | 60.5 |
| 3 | 45 | 17 | 60.1 |
| 4 | 43 | 18 | 64.4 |
| 5 | 44 | 23 | 69.4 |
| 6 | 44 | 24 | 65.1 |
| 7 | 43 | 17 | 68.7 |
| 8 | 42 | 17 | 65.9 |
| R1 | 56 | 23 | 52.0 |
| R2 | 41 | 22 | 53.0 |
| R3 | 38 | 17 | 60.1 |

### Tests on the fillings

### Oiling out and Collapsing tests

For the tests, samples are incubated at 4 different temperatures (20, 25, 28 °C and a cycling of 20 °C (16 h) and 25 °C (8 h)) at a Relative Humidity (RH) of 65 %. Samples are measured after set intervals over a period of 8 weeks.

Foam collapse over time was observed visually. Centrifuge tubes (50 mL, VRW, Lutterworth, UK) were filled with aerated filling. Over time, the foam collapse was observed by tracking the height of the standing samples in the tubes during incubation at different temperatures (20, 25, 28 °C and a cycling of 20 °C (16 h) and 25 °C (8 h))

None of the aerated samples shows any oiling out, as shown by the illustrative embodiments in Figure 2.

This was confirmed by a centrifugation test as follows. Place pots with the filling in the oven (at 28°C) for 30 minutes. Weigh 6 g (± 0.1 g) of the sample into a pyrex centrifuge tube. Record the sample weight. Place the tubes back into the oven (at 28°C) for 15 minutes prior to placing in centrifuge. Remove the tubes from the oven and place them in the centrifuge. Run the centrifuge at the following conditions: 3000 rpm, 28°C for 15 mins. Remove the tubes from the centrifuge and decant the oil layer into a clean test tube. Record the mass of oil

It is also noted that Reference 2 softened significantly in the cycling, when compared to Samples 1, 2, 5 and 6. It is also noted that Reference 1 collapsed.

This suggests that the fibres positively influenced the stability of fillings during cycling.

### De-aeration

Industrial mixing and depositing steps are mimicked to understand the loss of aeration during processing.

Mixing is mimicked in the following way: aerated filling is deposited in a bowl for 60 seconds. To this mass, 1 % of flavour powder is added. During 60 seconds the flavourings are manually mixed into the filling, using a spatula. Every 20 seconds a sample is taken, and placed into a 26 ml cup. The loss of aeration is calculated based on weight.

Fillings with unrefined fibres give less de-aeration during mixing than refined fibres.

### Texture

The texture of the aerated fillings is mainly dependent on the fat type used and the influence of the different fibres is not clearly seen.

### SFC measurement by NMR

NMR (Bruker, the Minispec mq20 NMR Analyser) was used to obtain crystallisation curves of the fats used in the trials, after cooling statically or dynamically. Fat samples of 25.0 grams were taken and cooled down from 60 °C to 20 °C in the RVA, at 1 °C/min, either statically or dynamically (200 rpm). After this cooling, the samples were held at 20 °C for 120 minutes, either stirred at 200 rpm or kept statically. The static samples were only subjected to a low shear in the last 10 minutes (10 rpm), to ensure they were homogenous during sampling. Fat samples (1.2 grams) were taken and put into NMR insert tubes (Bruker (45x8x0.5 mm), which are placed in NMR tubes (Bruker, NMS TUB10 18B3).

The samples were measured at 20 °C (average product temperature during aeration), and measurements of the SFC were taken continuously over a total time of 350 min. All fats were measured in duplicate.

Results are displayed in Figure 1. Fat 6 had a solid fat content of under 5% but still provided stable, aerated compositions, which is contrary to the established understanding of aeration of fat compositions.

### Sensory evaluation of the aerated fillings

An internal sensory panel of 7 people assessed the filling samples stored for 8 weeks at 20 °C on hardness, grittiness, aeration, dryness, melting time, mouth coating, sweetness and milky flavour. The test was set up in three parts. The first session involved training to get familiar with the product and the attributes to assess. The other two sessions were used to assess a total of 10 samples and references. Every sample was presented in a 26 mL cup and was coded with a three-digit code. The sample order was different per panel member. The different attributes were graded on a line scale in comparison to the reference values, which were agreed with the panellists in the training session. Scale limits of the attributes were between "not" to "very", except for melting time, which had a scale between "short" and "long". Sensory scores ranged from 1-10.

For the sensory results, the samples were ranked comparing to Reference 1, which was given separately labelled as 'Reference'. The same sample (Reference 1) was also given to assess as one of the coded samples. Scores agreed for the reference sample were compared to the scores for the coded sample, to see it the panel scoring was consistent. The scores were almost identical for all attributes, only the aeration level scores 0.8/10 were higher for the coded sample. Overall, this means that the panel has performed very consistently.

Therefore, it is concluded that the study is reproducible and valid conclusions can be drawn.

A significant difference between the samples was found for all attributes, except sweetness. This indicated that fibres could be added into fillings without influencing the sweetness.

For the dryness, it was found that all samples with Fat 5 were perceived more dry than the other samples. The Fat 6 samples were perceived less dry, particularly the 8 % pea fibre sample, which was perceived less dry than Reference 1. This means that even with a reasonable amount of fibre, a less dry structure could be produced, which was more stable. This is an important finding, meaning that the present invention can help improve the sensory experience.

Samples with apple fibre were perceived less milky compared to samples with pea fibre, because the apple fibre gave a fruity flavour. The samples with the pea fibre gave a similar milky flavour to the reference samples. This is advantageous, as it means that pea fibre could be incorporated into samples in high percentages (12 %), without having any impact on the flavour. This makes it easier to incorporate the present invention into already existing products, which need to keep the same well-known flavour.

Accordingly, as shown by these examples, the fillings of the present invention provide advantageous properties in respect of fat reduction, bloom control and sensory perception.

## Claims

1. A chocolate product comprising a filling composition comprising at least one fibre and at least one fat, the filling comprising at least 5.0% w/w and less than or equal to 75.0% w/w of the at least one fat and at between 5.0 and 20.0 wt% of the at least one fibre and the filling composition is aerated, wherein the at least one fat comprises at least one solid fat and at least one liquid fat and the degree of aeration is between 25% and 70%, wherein the at least one fibre comprises a fibre selected from apple, pea, cocoa, blackcurrant, spent grain, wheat bran or combinations thereof.

2. A chocolate product according to claim 1, wherein the at least one fat is selected from the group consisting of olive oil, safflower oil, sunflower oil, fish oil, soy bean oil, soy oil, flaxseed oil, rapeseed oil, primrose oil, linseed oil, corn oil, grape seed oil, nut oil, rice bran oil, sesame oil, peanut oil, cottonseed oil, high oleic sunflower oil, high oleic safflower oil, high oleic soybean oil, high oleic rapeseed oil such as high oleic canola oil, algal oil (for example high oleic algal oil), macadamia nut oil, hazelnut oil, avocado oil, grape-seed oil, cotton-seed oil, corn oil and combinations thereof.

3. A chocolate product according to any of claims 1 to 2, wherein the at least one fat is selected from the group consisting of coconut oil, palm kernel oil, palm oil, cocoa butter, butter oil, lard, tallow, oil / fat fractions such as lauric, stearin or olein fractions, hydrogenated oils (partial and full hydrogenation), shea fat, cocoa butter extender fats, inter-esterified fats, and combinations thereof.

4. A chocolate product according to any of claims 1 to 3, wherein the weight ratio of liquid fat to solid fat is between 1.0:0.50 to 1.0:5.0.

5. A chocolate product according to any one of the preceding claims wherein the at least one fat comprises sunflower oil, preferably high oleic sunflower oil, and palm fat.

6. A chocolate product according to any of the preceding claims, wherein the fibre particle size D90 is between 10 microns and 200 microns, preferably between 25 microns and 75 microns.

7. A chocolate product according to any of the preceding claims, wherein the at least one fat content of the filling is 25-55% by weight of the filling and the at least one fibre content of filling is 2.5wt% and 15.0wt% by weight of the filling.

8. A chocolate product according to claim 7, wherein the at least one fat comprises a liquid fat and a solid fat, and the weight ratio of liquid fat to solid fat is from 1.0:0.40 to 1.0:1.60.

9. A process for preparing the chocolate product of any of claims 1 to 8, comprising the steps of:
• optionally melting any solid fat present and optionally combining multiple fats if more than one fat is present,
• mixing a portion of the fat with any dry components present, excluding the at least one fibre,
• refining the mixture,
• mixing the refined mass with the remainder of the fat and the at least one fibre and an optional emulsifier to obtain the filling composition; and
• aerating the filling composition.

10. A process for preparing the chocolate product of any of claims 1 to 8, comprising the steps of:
• optionally melting any solid fat present and optionally combining multiple fats if more than one fat is present,
• mixing a portion of the fat with any dry components present including the at least one fibre,
• refining the mixture,
• mixing the refined mass with the remainder of the fat and an optional emulsifier to obtain the filling composition; and
• aerating the filling composition.

11. The use of the filling composition as defined in any of claims 1 to 8 to replace a portion of a filling composition comprising a nut-based component, preferably a peanut and/or hazelnut.

## Patentansprüche

1. Schokoladenprodukt, umfassend eine Füllungszusammensetzung, umfassend mindestens einen Ballaststoff und mindestens ein Fett, die Füllung umfassend zu mindestens 5,0 Gew.-% und zu weniger als oder gleich 75,0 Gew.-% das mindestens eine Fett und zu zwischen 5,0 und 20,0 Gew.-% den mindestens einen Ballaststoff und wobei die Füllungszusammensetzung belüftet ist, wobei das mindestens eine Fett mindestens ein festes Fett und mindestens ein flüssiges Fett umfasst und der Belüftungsgrad zwischen 25 % und 70 % liegt, wobei der mindestens eine Ballaststoff einen Ballaststoff umfasst, ausgewählt aus Apfel, Erbse, Kakao, schwarzer Johannisbeere, Malztreber, Weizenkleie oder Kombinationen davon.

2. Schokoladenprodukt nach Anspruch 1, wobei das mindestens eine Fett aus der Gruppe ausgewählt ist, bestehend aus Olivenöl, Distelöl, Sonnenblumenöl, Fischöl, Sojabohnenöl, Sojaöl, Flachsöl, Rapsöl, Primelöl, Leinöl, Maisöl, Traubenkernöl, Nussöl, Reiskleieöl, Sesamöl, Erdnussöl, Baumwollsamenöl, Sonnenblumenöl mit hohem Ölsäuregehalt, Distelöl mit hohem Ölsäuregehalt, Sojabohnenöl mit hohem Ölsäuregehalt, Rapsöl mit hohem Ölsäuregehalt wie Canolaöl mit hohem Ölsäuregehalt, Algenöl (zum Beispiel Algenöl mit hohem Ölsäuregehalt), Macadamianussöl, Haselnussöl, Avocadoöl, Traubenkernöl, Baumwollsamenöl, Maisöl und Kombinationen davon.

3. Schokoladenprodukt nach einem der Ansprüche 1 bis 2, wobei das mindestens eine Fett aus der Gruppe ausgewählt ist, bestehend aus Kokosnussöl, Palmkernöl, Palmöl, Kakaobutter, Butteröl, Schmalz, Talg, Öl-/Fettfraktionen wie Laurin-, Stearin- oder Oleinfraktionen, hydrierten Ölen (Teil- und Vollhydrierung), Sheafett, Kakaobutterstreckmittelfetten, umgeesterten Fetten und Kombinationen davon.

4. Schokoladenprodukt nach einem der Ansprüche 1 bis 3, wobei das Gewichtsverhältnis von flüssigem Fett zu festem Fett zwischen 1,0 : 0,50 und 1,0 : 5,0 liegt.

5. Schokoladenprodukt nach einem der vorstehenden Ansprüche, wobei das mindestens eine Fett Sonnenblumenöl, vorzugsweise Sonnenblumenöl mit hohem Ölsäuregehalt, und Palmfett umfasst.

6. Schokoladenprodukt nach einem der vorstehenden Ansprüche, wobei die Ballaststoffpartikelgröße D90 zwischen 10 Mikrometern und 200 Mikrometern, vorzugsweise zwischen 25 Mikrometern und 75 Mikrometern, liegt.

7. Schokoladenprodukt nach einem der vorstehenden Ansprüche, wobei der mindestens eine Fettgehalt der Füllung 25-55 Gew.-% der Füllung beträgt und der mindestens eine Ballaststoffgehalt der Füllung 2,5 Gew.-% und 15,0 Gew.-% der Füllung beträgt.

8. Schokoladenprodukt nach Anspruch 7, wobei das mindestens eine Fett ein flüssiges Fett und ein festes Fett umfasst und das Gewichtsverhältnis von flüssigem Fett zu festem Fett von 1,0 : 0,40 bis 1,0 : 1,60 beträgt.

9. Verfahren zum Herstellen des Schokoladenprodukts nach einem der Ansprüche 1 bis 8, umfassend die Schritte:
• optionales Schmelzen beliebigen vorhandenen festen Fetts und optionales Kombinieren mehrerer Fette, falls mehr als ein Fett vorhanden ist,
• Mischen eines Anteils des Fetts mit beliebigen vorhandenen Trockenkomponenten, die den mindestens einen Ballaststoff ausschließen,
• Raffinieren der Mischung,
• Mischen der raffinierten Masse mit dem Rest des Fetts und dem mindestens einen Ballaststoff und einem optionalen Emulgator, um die Füllungszusammensetzung zu erhalten; und
• Belüften der Füllungszusammensetzung.

10. Verfahren zum Herstellen des Schokoladenprodukts nach einem der Ansprüche 1 bis 8, umfassend die Schritte:
• optionales Schmelzen beliebigen vorhandenen festen Fetts und optionales Kombinieren mehrerer Fette, falls mehr als ein Fett vorhanden ist,
• Mischen eines Anteils des Fetts mit beliebigen vorhandenen Trockenkomponenten, die den mindestens einen Ballaststoff einschließen,
• Raffinieren der Mischung,
• Mischen der raffinierten Masse mit dem Rest des Fetts und einem optionalen Emulgator, um die Füllungszusammensetzung zu erhalten; und
• Belüften der Füllungszusammensetzung.

11. Verwendung der Füllungszusammensetzung nach einem der Ansprüche 1 bis 8, um einen Anteil einer Füllungszusammensetzung, umfassend eine Komponente auf Nussbasis, vorzugsweise eine Erdnuss und/oder eine Haselnuss, zu ersetzen.

## Revendications

1. Produit chocolaté comprenant une composition de garniture comprenant au moins une fibre et au moins une matière grasse, la garniture comprenant au moins 5,0 % p/p et étant inférieure ou égale à 75,0 % p/p de l'au moins une matière grasse et entre 5,0 et 20,0 % en poids de l'au moins une fibre et la composition de garniture est aérée, dans lequel l'au moins une matière grasse comprend au moins une matière grasse solide et au moins une matière grasse liquide et le degré d'aération est compris entre 25 % et 70 %, dans lequel l'au moins une fibre comprend une fibre choisie parmi pomme, pois, cacao, cassis, drêches, son de blé ou combinaisons de ceux-ci.

2. Produit chocolaté selon la revendication 1, dans lequel l'au moins une matière grasse est choisie dans le groupe constitué d'huile d'olive, huile de carthame, huile de tournesol, huile de poisson, huile de graines de soja, huile de soja, huile de graines de lin, huile de colza, huile de primevère, huile de lin, huile de maïs, huile de pépins de raisin, huile de noix, huile de son de riz, huile de sésame, huile d'arachide, huile de graines de coton, huile de tournesol à haute teneur en acide oléique, huile de carthame à haute teneur en acide oléique, huile de graines de soja à haute teneur en acide oléique, huile de colza à haute teneur en acide oléique telle que huile de canola à haute teneur en acide oléique, huile d'algues (par exemple, huile d'algues à haute teneur en acide oléique), huile de noix de macadamia, huile de noisette, huile d'avocat, huile de pépins de raisin, huile de graines de coton, huile de maïs et combinaisons de celles-ci.

3. Produit chocolaté selon l'une quelconque des revendications 1 à 2, dans lequel l'au moins une matière grasse est choisie dans le groupe constitué d'huile de coco, huile de palmiste, huile de palme, beurre de cacao, huile de beurre, saindoux, suif, fractions huile/matière grasse telles que fractions laurique, stéarine ou oléine, huiles hydrogénées (hydrogénation partielle et totale), matière grasse de karité, matières grasses d'allongement de beurre de cacao, matières grasses interestérifiées, et combinaisons de ceux-ci.

4. Produit chocolaté selon l'une quelconque des revendications 1 à 3, dans lequel le rapport en poids entre la matière grasse liquide et la matière grasse solide est compris entre 1,0:0,50 et 1,0:5,0.

5. Produit chocolaté selon l'une quelconque des revendications précédentes, dans lequel l'au moins une matière grasse comprend de l'huile de tournesol, de préférence, de l'huile de tournesol à haute teneur en acide oléique, et de la graisse de palme.

6. Produit chocolaté selon l'une quelconque des revendications précédentes, dans lequel la taille des particules de fibre D90 est comprise entre 10 micromètres et 200 micromètres, de préférence, entre 25 micromètres et 75 micromètres.

7. Produit chocolaté selon l'une quelconque des revendications précédentes, dans lequel l'au moins une teneur en matière grasse de la garniture est de 25 à 55 % en poids de la garniture et l'au moins une teneur en fibre de la garniture est de 2,5 % en poids et 15,0 % en poids en poids de la garniture.

8. Produit chocolaté selon la revendication 7, dans lequel l'au moins une matière grasse comprend une matière grasse liquide et une matière grasse solide, et le rapport en poids entre la matière grasse liquide et la matière grasse solide va de 1,0:0,40 à 1,0:1,60.

9. Procédé de préparation du produit chocolaté selon l'une quelconque des revendications 1 à 8, comprenant les étapes consistant à :
• faire fondre éventuellement toute matière grasse solide présente et combiner éventuellement plusieurs matières grasses si plus d'une matière grasse est présente,
• mélanger une partie de la matière grasse avec tous les composants secs présents, à l'exception de l'au moins une fibre,
• raffiner le mélange,
• mélanger la masse raffinée avec le reste de la matière grasse et l'au moins une fibre et un émulsifiant éventuel pour obtenir la composition de garniture ; et
• aérer la composition de garniture.

10. Procédé de préparation du produit chocolaté selon l'une quelconque des revendications 1 à 8, comprenant les étapes consistant à :
• faire fondre éventuellement toute matière grasse solide présente et éventuellement combiner plusieurs matières grasses si plus d'une matière grasse est présente,
• mélanger une partie de la matière grasse avec tous les composants secs présents, y compris l'au moins une fibre,
• raffiner le mélange,
• mélanger la masse raffinée avec le reste de la matière grasse et un émulsifiant éventuel pour obtenir la composition de garniture ; et
• aérer la composition de garniture.

11. Utilisation de la composition de garniture telle que définie selon l'une quelconque des revendications 1 à 8 pour remplacer une partie d'une composition de garniture comprenant un composant à base de fruits à coque, de préférence une arachide et/ou une noisette.
